# EUROPEAN PATENT SPECIFICATION

(11) **EP 4 151 466 B1**
(45) Date of publication and mention of the grant of the patent: **06.03.2024**
(21) Application number: 21197828.3
(22) Date of filing: 20.09.2021
(51) Int. Cl.: B60Q 1/32

(54) **ROAD VEHICLE EMITTING A WARNING SIGNAL AND METHOD FOR MODIFYING THE WARNING SIGNAL**
STRASSENFAHRZEUG MIT WARNSIGNALEMISSION UND VERFAHREN ZUR MODIFIZIERUNG DES WARNSIGNALS
VÉHICULE ROUTIER ÉMETTANT UN SIGNAL D'AVERTISSEMENT ET PROCÉDÉ POUR MODIFIER LE SIGNAL D'AVERTISSEMENT

(43) Date of publication of application: 22.03.2023
(73) Proprietor: Bayerische Motoren Werke Aktiengesellschaft, 80809 München (DE)
(72) Inventor: Zaki, Tarek, 81829 München (DE)

(56) References cited:
- WO-A1-2017/083936
- DE-A1-102012 021 249
- US-A1- 2012 194 356
- US-A1- 2017 218 678

## Description

The invention concerns a road vehicle with a controller and a signaling device to warn about a possible opening for a port, in particular a door, of the vehicle and a method for modifying the warning signal.

There have been accidents where people in the surrounding of a vehicle have been hurt or killed when a door has been opened by an occupant of a road vehicle. Such a person can be a person walking past the vehicle or a cyclist passing a parking vehicle. Road vehicles have been equipped to give signals, i.e.to emit a warning that an occupant of the vehicle is about to exit the vehicle.

WO 2017/083936 A1 discloses a system for warning a road user of a possible, a probable or an impending opening of a vehicle door, wherein the system comprises sensor means configured to sense a state of a vehicle device or an activity of a vehicle occupant, the state or activity being associated with possible, probable or impending opening a vehicle door, and road user alert means configured to alert a road user proximal to the vehicle of the possible, probable or impending opening of the vehicle door, wherein the system is configured such that upon sensing of a state or activity associated with the possible, probable or impending opening of a vehicle door the road user alert means is automatically actuated to emit an alert signal comprehensible by a road user, wherein the road user alert means is comprehensible by a road user who is travelling toward the car from the rear, whereby the road user (such as a cyclist) assumes responsibility for his/her own safety by staying vigilant for actuated alert means of the system, and taking any necessary evasive activity (such as swerving or braking) to avoid a door impact collision and cyclists and other road users are no longer dependent on a car occupant to act appropriately and speedily in order to a door opening collision.

US 2012/0194356 A1 discloses a system for protecting the safety of occupants exiting and entering a vehicle, wherein the system has sensors on the interior, exterior and remotely of the vehicle and one or more imaging devices that project an image onto the pavement supporting the vehicle as well as optional data input devices all communicating with a system controller, wherein the system anticipates that the occupant will be leaving the vehicle and the time it will take for the occupant to fully exit the vehicle, and further controls the imaging devices to warn the drivers of oncoming traffic of the occupant's egress and warn or block the egress of the occupant should a particularly dangerous condition exist.

US 2017/0218678 A1 discloses an apparatus, a system, and a method for preventing vehicle door related accidents for helping to detect oncoming traffic and/or nearby external objects when an occupant of the vehicle or the vehicle processor demonstrates an intent to open the vehicle door, and to generate an alert for the vehicle users, or generate an external alert for the outside users, or automatically stop the vehicle door from opening further if there was a possibility of an accident involving the vehicle doors or its users, wherein the system comprises an internal alert mechanism to alert vehicle users about the oncoming traffic and/or nearby external objects, an external alert mechanism, which generates alert externally that vehicle door is about to be opened, and a feature to restrict the vehicle doors from opening further when there is a potential for door related accident.

It is an object of the present invention to improve on such road vehicles.

This object is achieved by the subject matter of the independent claims. Advantageous modifications are explained in the dependent claims.

A first aspect of the invention is a road vehicle comprising: two or more ports on the same side of the vehicle; a sensor device comprising one or more sensors, the sensor device being configured to detect for each port individually a non-finished or imminent opening event of the respective port, the sensor device being further configured to output sensor signals representing the result of the detecting; a signaling device comprising at least one optical transducer to emit optical light signals; a controller configured to control the signaling device as a function of the sensor signals to cause the at least one transducer to emit a respective light signal for each of the ports for which a detected non-finished or imminent opening event is represented by the sensor signals such that each light signal is individually assigned to the respective port; wherein the controller is further configured to determine for each detected non-finished or imminent opening event, based on the sensor signals, a probability of an actual occurrence of such opening event and to modify the optical light signal for such port as a function of the determined probability.

The term "port", as used herein, refers in particular to a door through which a person can enter or leave the vehicle but can also refer to a hatch. Hatches can be used for putting luggage, freight or cargo into the road vehicle or for removing it. Hatches can also be used as openings through which fuel or electrical power can be supplied to the road vehicle.

The term "side of the vehicle", as used herein, refers, in particular, to a right or left hand side as seen from the direction in which the vehicle is travelling. It can also mean the front or the rear of the vehicle.

The term "sensor", as used herein, refers, in particular, to an imaging device, proximity switch, infrared sensor, load sensor in a seat of the vehicle or a sensor for a position of a lever or switch like the ON/OFF position. Imaging devices usually comprise a camera and can comprise also illumination devices, which are helpful especially at night. In this case, both illumination device and camera should operate on matching infrared frequencies not visible to the human eye in order to avoid blinding. The camera can be an in-cabin camera (for detecting an occupant of the road vehicle) as well as on outdoor camera in order to detect objects and/or persons approaching the vehicle.

Such a road vehicle is equipped to issue different levels of a warning to e. g. oncoming cyclists because it can assign different probabilities to a non-finished or imminent opening event. Based on the respective probabilities, the signals projected onto a surface like the ground next to the door of the vehicle can be modified, e. g. increased in intensity.

The controller is further configured to repeatedly determine for each detected non-finished or imminent opening event a probability of an actual occurrence of such opening event and to determine a rate of change of the probability over time as a function of these determined probabilities, and to modify the optical light signal according to the determined rate of change of the probability.

If the probability is determined repeatedly, the rate of change can be used to increase the intensity over time so that a person passing near the vehicle can perceive a change in the projected signal over time. By an increase in intensity of the projected optical light signal over time, the person approaching the road vehicle can also be alerted earlier of an imminent opening event and act accordingly, e.g. take evasive action The term "intensity", as used herein, refers, in particular, to the color of an optical signal, which can change from yellow to red, to the frequency with which the optical signal is flashing, or a speed of an animation, like the movement of one or more arrows or other indicators pointing in the direction where the port is about to open.

In an embodiment, the port of a vehicle is a door, through which a person can exit or enter the road vehicle and/or a hatch, which is being used for loading/unloading, fueling or servicing the road vehicle.

The invention is not only concerned with opening of doors for persons, but also with hatches for luggage or servicing the vehicle. Also, hatches to connect a media supply like gasoline, diesel or electrical power can negatively affect the path of a passenger or cyclist approaching the vehicle. In all these cases, an alerting optical signal can be helpful to avoid accidents.

In an embodiment, the sensors used by the road vehicle to detect a non-finished or imminent opening event of a port comprise any of the following as well as any combination of two or more:
a speedometer of the road vehicle;
a GPS system of the road vehicle configured to indicate the distance to a destination; a toggle switch for the ON/OFF status of the road vehicle or a component of the vehicle;
a switch on a seatbelt buckle of the road vehicle;
an imaging device configured to track a posture of an occupant of the road vehicle;
an imaging device configured to create an image of the periphery of the vehicle;
a fingerprint sensor;
a microphone in a cabin of the vehicle;
a load sensor of a seat of the vehicle;
a proximity sensor configured to detect a distance of an occupant of the road vehicle from a door handle;
a touch sensor on the door handle.

The speedometer can be used to detect if the vehicle is at a standstill. At speed zero, the probability of an opening event is much higher than when the vehicle is moving at a non-zero speed. The GPS, into which the destination or target of the drive has been entered, will have the current distance from the target of the drive in its memory. If this distance is low, then there is a high probability that one or more occupants will exit the vehicle. When the vehicle is turned from ON to OFF, by a mechanical or electronical key or by a switch, this can be sensed by a toggle switch. If it is detected by the toggle switch that the vehicle is turned OFF, then the probability of an opening event increases. Further components of the vehicle can include a radio, an entertainment system of the driver or any passenger of the vehicle, and/or a central display. Such a toggle switch can also be used to detect the removal of a key from the lock or holder. An opening of a seatbelt buckle can also be used as a signal for the controller to increase the probability of an opening event. Imaging devices can detect an occupant. Imaging devices can use eye tracking and/or posture tracking of vehicle occupants to detect if an occupant is about to exit the vehicle. Such a detection can also be used by the controller to increase the probability of an opening event. The term "posture", as used herein, refers, in particular, to a physical position of one or more limbs of an occupant of the vehicle, an inclination of the head of the occupant, or the direction of a gaze of the occupant as determined by an eye tracking technology. A fingerprint sensor can be used to determine the identity of an occupant of the vehicle, which will be described below. An in-cabin microphone can be used to detect specific sounds like voices in the cabin of the vehicle and to evaluate those sounds. A load sensor can be used to detect movement of an occupant out of the respective seat. Such a movement can be part of the movements the occupant is performing when exiting the vehicle. A proximity switch and a touch sensor can be used to detect if the hand of an occupant is approaching the door handle (i.e. touching the door handle is imminent) or the touching of the door handle itself. The approaching of the door handle by an occupant can be used by the controller to increase the probability of an opening event. If it is detected by the touch sensor that the occupant is touching the door handle, the controller can use this signal to increase the probability even further.

The term "door handle", as used herein, refers, in particular, to a conventional mechanical handle or a touch sensor or switch to activate electrical opening of the door.

In an embodiment, the controller is configured to store sensor signals which were received by the controller before at least one prior opening event; to retrieve the sensor signals stored before the at least one prior opening event; and to determine the probability based on a combined evaluation of the retrieved sensor signals together with sensor signals of a current opening event.

If the controller of the vehicle stores sensor signals from earlier opening events in memory, the accuracy of the determination of the probability of an opening event can be improved if sensor signals of a current opening event can be compared to sensor signals of prior opening events. From two or more opening events, identical or similar sensor signals can be detected. Identical or similar sensor signals can be used by the controller to better determine the probability of a non-finished or imminent opening event. It is also possible in this way to decrease the time before the probability will have risen to a level necessary to emit an optical warning signal. If the controller compares sensor signals of prior opening events to sensor signals of the current opening event, the time before the controller causes the emission of a warning can be decreased in the event of a positive correlation between prior and current sensor signals. In other words, the opening event will be indicated earlier in this case as compared to the case where the controller does not store earlier opening events. Thereby, an oncoming passenger or cyclist has more time available to react to the warning. In an embodiment, the controller is further configured to evaluate sensor signals of two or more opening events in order to determine a pattern of behavior of an occupant of the vehicle.

In an embodiment, the controller is configured to evaluate sensor signals of two or more opening events in order to determine a pattern of behavior of an occupant of the road vehicle; and to determine the probability based on a combined evaluation of sensor signals together with the stored pattern of behavior

For example, an imaging device can detect that an occupant of the vehicle is always leaning towards the door before opening it, and/or that the driver of the vehicle (who is also an occupant) always puts one hand on the steering wheel to stabilize before opening the door. Some drivers can leave the ON/OFF switch in the ON position for a while and turn it to OFF immediately before exiting the vehicle. Other drivers can turn the switch to OFF immediately after stopping the vehicle and collect some items and exit the vehicle only a while after turning the switch to OFF. These examples show a few of numerous possibilities for the controller to use sensor signals to determine a pattern in the behavior of an occupant of the vehicle. For example, occupants of the vehicle may be leaning towards the door of the vehicle when preparing to exit the vehicle. Such a leaning towards the door can be detected by an in-cabin camera or by a set of two load sensors which are spaced apart from each other in left - right direction in the vehicle. An occupant who is leaning towards the door will increase the load on the sensor closer to the door, while the load on the sensor distant from the door will diminish. Leaning towards the door is thus a pattern in the behavior of an occupant. Another possible pattern can be determined using the microphone. Natural language processing (NLP) can be used in order to detect keywords or key phrases like "let's go", "hurry up", "let's move", "open the doors" etc. If such a pattern is determined, this can be beneficial for the controller in determining the probability of a non-finished or imminent opening event. In this respect, machine learning algorithms can be used by the controller. The accuracy of determining a probability of a non-finished or imminent opening event can thus be further improved. The controller is thus enabled to cause the emission of a warning signal earlier, if patterns of behavior are detected which are indicative of an imminent opening event.

In an embodiment, the controller is further configured to identify an occupant of the vehicle; and to determine the probability based on a combined evaluation of sensor signals of a current opening event together with the identity of the occupant.

This feature can be used by the controller to identify an occupant and, in this way, to attribute specific patterns of behavior to a specific occupant. The identification can be performed based on information from a mobile device which the occupant is carrying; based on information from a personalized car key, log-in credentials for the vehicle, based on sensor signals from the imaging device in the cabin of the vehicle, a microphone, and/or a fingerprint sensor. Each of the devices mentioned above can send signals to the sensor device. For example, the sensor device can register signals received by the microphone and perform voice recognition in order to identify an occupant of the vehicle. Signals from the camera can be used to perform face recognition in the identification process. The accuracy determining a probability of a non-finished or imminent opening event can thus be further improved. Further, it is possible with this feature to emit the warning signal earlier.

In an embodiment, the controller is further configured to evaluate sensor signals of two or more opening events in order to determine a respective pattern of behavior of the identified occupant of the vehicle, and to determine the probability based on a combined evaluation of sensor signals of a current opening event together with the stored pattern of behavior and the identity of the occupant.

If an occupant has been identified and the pattern of behavior is connected with this particular occupant, such a feature can help in improving the accuracy of the determination of the probability. Thereby, an earlier warning is enabled, when the controller is enabled to connect a certain pattern of behavior which has been stored at earlier opening events with an identified occupant.

In an embodiment, the controller is configured to include the position of an identified occupant related to a specific port in determining the pattern; and to determine the probability based on a combined evaluation of sensor signals of a current opening event together with the stored pattern of behavior of the identified occupant.

This feature can be used by the controller to detect a specific occupant no matter in which seat of the vehicle the occupant is located. Thereby, the controller can transfer patterns of behavior of an identified occupant to the routine for a different port.

In an embodiment, the sensor device (10) is configured to use natural language processing on signals from the microphone in order to identify keywords indicative of a non-finished or imminent opening event.

An important possibility to detect a possible event of the opening of a door would be an in-cabin microphone. Natural language processing (NLP) can be used in order to detect keywords or key phrases like "let's go", "hurry up", "let's move", "open the doors" etc. The sensor device will use the result of the natural language processing to send a signal to the controller representing an imminent door opening event.

In an embodiment, the controller is configured to increase the probability of the opening event with decreasing distance of an occupant from the door handle. This distance is detected by the proximity sensor.

If the proximity sensor of a door handle is used to determine the distance of the hand of the occupant from the door handle, the probability of a non-finished or imminent opening event is increased. This feature can be beneficially used by the controller in determining the probability. Speed and accuracy of the determination will be increased.

In an embodiment, the at least one optical transducer is configured to project onto the surface external to the vehicle a respective light signal for each of the ports for which a detected non-finished or imminent opening event is represented by the sensor signals such that each light signal is projected along a respective light path onto a surface in the periphery of the road vehicle.

If the optical transducer is configured to operate like a projector, a signal that contains information can be projected, for example, onto the floor or ground next to the vehicle. This information will be helpful for persons approaching the vehicle to understand the situation, namely that a door opening event is imminent.

A second aspect of the invention is a method of modifying optical signals projected onto a surface in the periphery of a road vehicle according to claim 12.

Such a method will allow a determination of a non-finished or imminent opening event.

A third aspect of the invention is a computer program to execute the method of the second aspect.

The controller can be realized in a computer which is configured to execute the method of the second aspect.

Further advantages, features and applications can be found in the detailed description as follows.
- **Fig. 1**: is a top view of a road vehicle emitting an optical signal;
- **Fig. 2**: shows the inside of a cabin of a road vehicle;
- **Fig. 3**: shows a detail of Fig. 2, a door handle;
- **Fig. 4**: shows the inside of a cabin as seen from an occupant's perspective;
- **Fig. 5**: is a 2^{nd} top view of a road vehicle emitting an optical signal;
- **Fig. 6**: is a flow diagram of the method to modify a light signal.

Throughout the Figures, the same reference numerals are used for the same elements of the invention or for elements corresponding to each other.

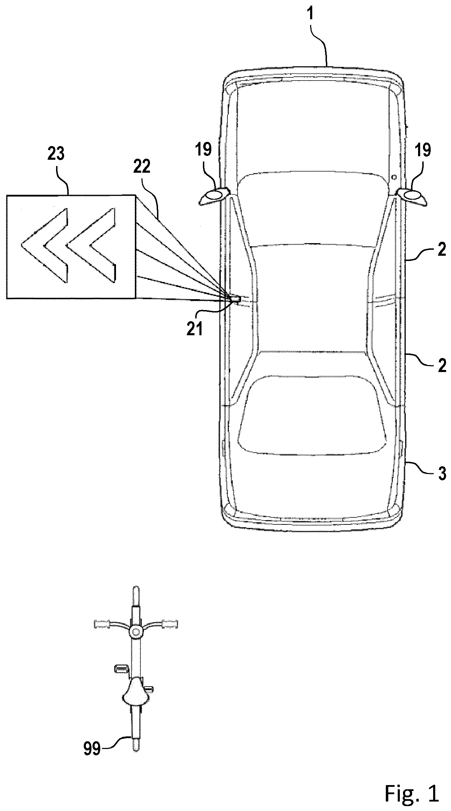

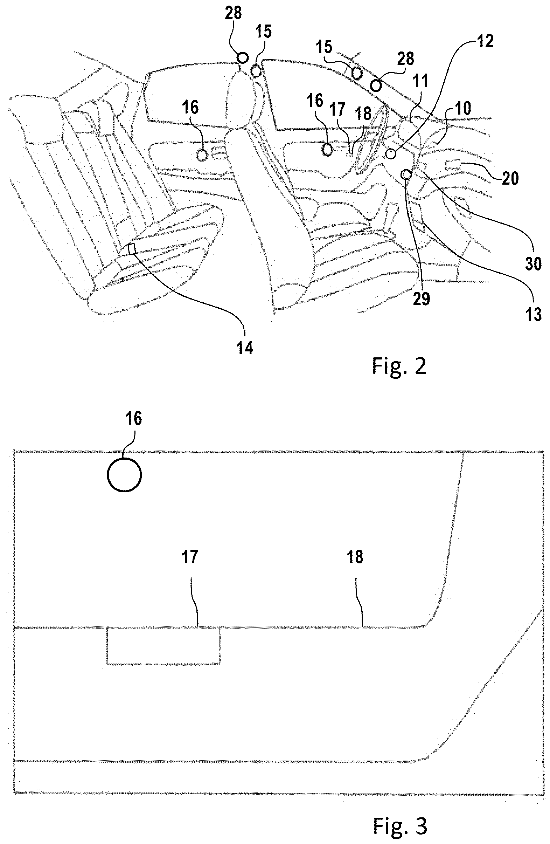

**Fig. 1** is a top view of a road vehicle 1 emitting an optical signal 23 along a light path 22 from a transducer 21. The vehicle has doors 2 and hatches 3. The doors are being used by passengers to enter or exit the road vehicle. In this case, the driver's door on the left hand side of the vehicle is about to be opened by the driver. The transducer 21 indicates this non-finished or imminent opening event to a bicycle 99. This bicycle 99 is approaching the road vehicle 1 from behind. The transducer 21 is emitting an optical signal 23 along the light path 22. A surface (not shown) in the periphery of the vehicle reflects the optical signal 23. In many cases, the surface is the ground next to the vehicle 1, for example a sidewalk or a parking lot. The signal is emitted because a camera 19 mounted to an exterior mirror of the vehicle detects the oncoming bicycle 99. The signals from the sensor 19, which serves as an imaging device, are transmitted to a sensor device 10 (see **Fig. 2**). The sensor device 10 detects for each port individually a non-finished or imminent opening event of the respective port based on the incoming signals from camera 19 and from other sensors. This detection of an opening event will be described below. After the detection, the sensor device 10 outputs the result of the detecting to a controller 30 (see **Fig. 2**). The controller 30 uses the result of the detecting, which it has received from the sensor device 10, in order to control the signaling device 20 (see **Fig. 2**). The signaling device 20 sends control signals to a transducer 21. The transducer 21 emits an optical signal 23 along a light path 22 towards the ground in the periphery of the vehicle 1. The optical signal 23 is reflected from the ground in the periphery of the vehicle so that the optical signal 23 can be perceived for example by the rider of the bicycle 99, which is approaching the road vehicle 1 from behind.

**Fig. 2** shows the inside of a cabin of a road vehicle 1. Examples of sensors are cameras 15, proximity sensors 16 in the vicinity of a door handle 18, which is also shown in **Fig. 3** in more detail. Further sensors, which can be switches, can be integrated into the ON/OFF switch 12 or a seatbelt buckle 14. If the seatbelt buckle is opened, the probability of an opening event increases. Another sensor is the speedometer with its display 11. If the speedometer senses that the vehicle is at a standstill, the probability of an opening event increases. The GPS with its display 13 is a further sensor. If the GPS system is used for navigation, the driver will have entered a destination. If the GPS senses that the vehicle 1 is at a distance of less than a few hundred meters from the destination, the probability of an opening event increases. Sensor device 10, signaling device 20 and controller 30 are shown schematically as boxes behind the dashboard of the road vehicle 1. Because they are not visible to an occupant of the cabin of the vehicle, these devices sensor device 10, signaling device 20 and controller 30 are indicated by very thin lines. All of the sensors shown in **Fig. 2** are sending their signals to the sensor device 10. The outdoor camera 19 is also sending signals to the sensor device 10.

**Fig.** 3 is a view of the door handles in **Fig. 2** in more detail. The door handle 18 is equipped with a touch sensor 17. This touch sensor 17 is also sending signals to the sensor device 10 (see **Fig. 2**).

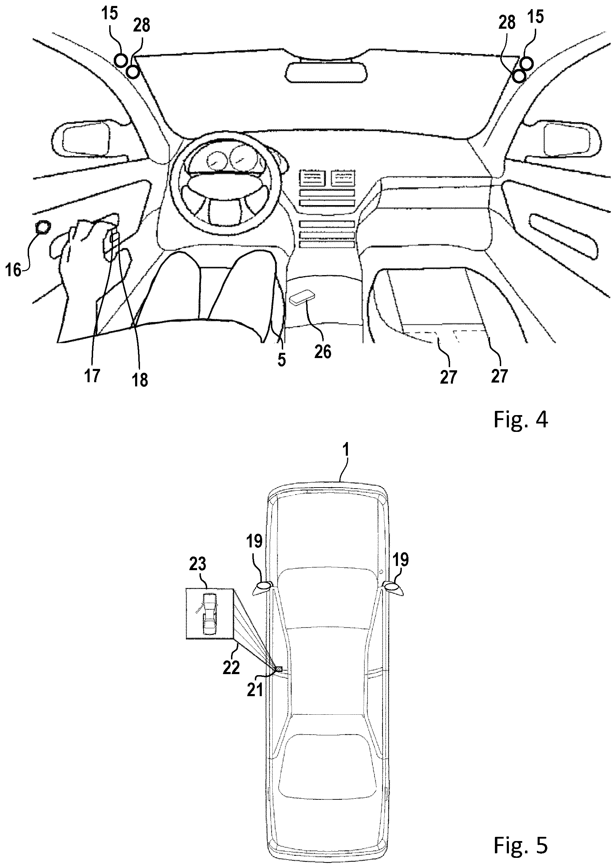

**Fig. 4** is another view of the inside of the cabin of the vehicle 1. The occupant 5, in other words the driver, is moving his hand towards the door handle 18 and the touch sensor 17 on the door handle. This is registered both by indoor camera 15 and by the proximity sensor 16 (see **Fig. 2**), which is located near door handle 18. The imaging device 15 in the cabin and the proximity sensor 16 send their signals to sensor device 10 (see **Fig. 2**). Sensor device 10 uses these signals and signals from other sensors in order to detect a non-finished or imminent opening event of the respective port. In this case, this port is the driver's door of the road vehicle 1. The lower the distance of the hand of the occupant 5 from the door handle 18 becomes, the more the probability of an opening event increases. This distance of the hand of the occupant 5 from the door handle 18 will be sent by the sensor device to the controller 30 in order to determine the probability of an opening event. When the hand of the occupant 5 is sensed by the touch sensor 17, the probability becomes even higher.

Two load sensors 27 (shown with dashed lines, because they are not normally visible from the inside of the cabin) are located inside each seat. They are normally used e. g. to detect if a seat belt should be used in this seat. With the invention, these at least two load sensors can further be used to detect if an occupant is leaning towards the door or away from the door. It happens that an occupant is leaning towards the door before opening it. In this case, the load will not be evenly distributed between the two load sensors 27. The load sensor closer to the door will register a higher load than the sensor further away from the door. This difference in the load signals of the two load sensors will be evaluated by the sensor device. It will generate a signal indicating a difference in load for the two load sensors in the seat. Such a leaning towards the door would be a pattern of a behavior of an occupant as described above. Alternatively or additionally, a leaning towards the door may also be detected by an in-cabin camera 15 as a change in the posture of the occupant 5. Such a change in posture would also be detected as a pattern of a behavior of an occupant.

Another possibility to detect a possible event of the opening of a door would be an in-cabin microphone 28. Natural language processing (NLP) can be used in order to detect keywords or key phrases like "let's go", "hurry up", "let's move", "open the doors" etc. The sensor device will use the result of the natural language processing to send a signal to the controller representing an imminent door opening event.

Another example of a road vehicle 1 emitting a light signal 23 along a light path 22 can be found in **Fig. 5****.** This time, the light signal 23 consists of a figurative representation of the vehicle 1 with its driver's door opening instead of arrows as they are shown in **Fig. 1****.** The other details are identical to those in **Fig. 1****.**

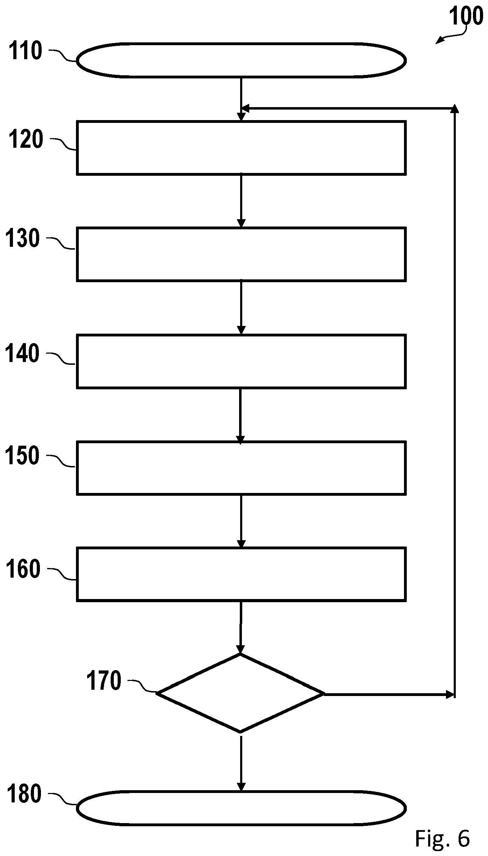

**Fig. 6** is a flow diagram of the method 100. The method starts in step 110. In step 120 the sensor device 10 receives signals from sensors like the speedometer, the toggle switch in the ignition lock, the GPS, the sensor switch in the seatbelt buckle 14, one or more imaging devices 15 in the cabin, the proximity sensor 16 of the door handle 18, a touch sensor 17 on the door handle 18, and outdoor imaging device 19. In step 130, the sensor device uses the signals from these sensors to detect for each door 2 or hatch 3 (for each port individually), if there is a non-finished or imminent opening event of the respective port. In step 140, the sensor device 10 outputs sensor signals which represent the result of the detecting to the controller 30. In step 150, the controller determines for a detected non-finished or imminent opening event the probability of an actual occurrence of such an opening event. In step 160, the controller modifies the signal for each port as a function of the determined probability. It is understood that this modification of the signal includes turning the signal on if the probability of an event increases from zero to a higher value. Further the modification also includes turning the signal back off if the probability returns to zero from a higher value. In particular, such a modification includes modifying the intensity of the signal. This means for example, that an increasing probability will also increase the intensity of the signal. The term "intensity" as used herein can mean any means to increase the attention of a person or an object. Specifically, such a modification can be achieved by changing the color of the light signal from yellow to red. It is also possible that an increase in intensity can be achieved by raising the brightness of the light signal. Another way of increasing the intensity is to increase the frequency of a flashing light signal. Further, the intensity can be increased by using an animated light signal. In the example of **Fig. 1****,** the projected arrows can be illuminated in such a sequence that they will be perceived as appearing next to the vehicle 1 and to be moving away from the vehicle 1. In this way, these arrows can serve as an indication that something will be moving in the direction as indicated within a short period of time.

In step 170, the decision is made by the controller if the vehicle is in an off state. In other words, if the vehicle is parked with no occupants inside, then the vehicle is in an off state- The method can move forward and end in step 180. If in step 170 it is found that there is an occupant inside the vehicle, the method will return to step 120 as indicated by the arrow on the right hand side of **Fig. 6****.**

The method 100 will not be operational during normal driving of the vehicle 1 in order to reduce the load on the onboard computational system. It can be started by different events, like a reduction in speed of the vehicle 1 to, for example, less than 3 km/h, or the release of a central locking system of the vehicle 1. Many other conditions to start the method 100 are also possible.

It should be understood that cameras 15 and 19 in the sense of this description can be imaging devices which are operating in visible light or in infrared light.

### LIST OF REFERENCE NUMERALS

- 1: road vehicle
- 2: port / door
- 3: port / hatch
- 5: occupant
- 10: sensor device
- 11: indicator of the speedometer
- 12: ON/OFF switch / ignition lock
- 13: GPS display
- 14: Seatbelt buckle with sensor switch
- 15: imaging device in the cab
- 16: proximity sensor for door handle
- 17: touch sensor on door handle
- 18: door handle
- 19: outdoor imaging device
- 20: signaling device
- 21: transducer
- 22: light path
- 23: projected optical signal
- 26: mobile device
- 27: load sensor
- 28: microphone
- 29: fingerprint sensor
- 30: controller
- 99: approaching bicycle
- 100: method of modifying a signal
- 110: start of the method
- 120: step of receiving sensor signals
- 130: step of detecting non-finished or imminent opening event
- 140: step of outputting the result of the detecting
- 150: step of determining a probability of an opening event
- 160: step of modifying an optical light signal
- 170: step of deciding if the vehicle is in an off state and empty
- 180: end of the method

## Claims

1. Road vehicle (1) comprising:
two or more ports (2, 3) on the same side of the vehicle (1);
a sensor device (10) comprising one or more sensors (13, 15, 16, 17, 19), the sensor device (10) being configured to detect for each port (2, 3) individually a non-finished or imminent opening event of the respective port (2, 3), the sensor device (10) being further configured to output sensor signals representing the result of the detecting;
a signaling device (20) comprising at least one optical transducer (21) for emitting optical light signals (23);
a controller (30) configured to control the signaling device (20) as a function of the sensor signals to cause the at least one transducer (21) to emit a respective light signal (23) for each of the ports (2, 3) for which a detected non-finished or imminent opening event is represented by the sensor signals such that each light signal (23) is individually assigned to the respective port (2, 3);
wherein the controller (30) is further configured to determine for each detected non-finished or imminent opening event, based on the sensor signals, a probability of an actual occurrence of such opening event and to modify the optical light signal (23) for such port (2, 3) as a function of the determined probability, wherein the controller (30) is further configured to repeatedly determine for each detected non-finished or imminent opening event a probability of an actual occurrence of such opening event,
**characterized in that** the controller (30) is further configured to determine a rate of change of the probability over time as a function of these determined probabilities, and
to modify the optical light signal (23) according to the determined rate of change of the probability.

2. Road vehicle (1) according to claim 1, wherein a port is a door (2), through which a person (5) can exit or enter the road vehicle, and/or a hatch (3), which is being used for loading/unloading, fueling or servicing the road vehicle.

3. Road vehicle (1) according to claim 1 or 2, the sensors comprising one or more of the following:
a speedometer of the road vehicle (1);
a GPS system of the road vehicle (1) configured to indicate the distance to a destination;
a toggle switch for the ON/OFF status of the road vehicle (1) or a component of the vehicle (1);
a switch on a seatbelt buckle (14) of the road vehicle (1);
an imaging device (15) configured to track a posture of an occupant (5) of the road vehicle (1);
an imaging device (19) configured to create an image of the periphery of the vehicle (1);
a fingerprint sensor (29);
a microphone (28) in a cabin of the vehicle (1);
a load sensor (27) of a seat of the vehicle (1);
a proximity sensor (16) configured to detect a distance of an occupant (5) of the road vehicle from a door handle (18);
a touch sensor (17) on the door handle (18).

4. Road vehicle (1) according to any one of claims 1 to 3, wherein the controller (30) is further configured
to store sensor signals which were received by the controller (30) before at least one prior opening event;
to retrieve the sensor signals stored before the at least one prior opening event; and
to determine the probability based on a combined evaluation of the retrieved sensor signals together with sensor signals of a current opening event.

5. Road vehicle (1) according to claim 4, wherein the controller (30) is further configured
to evaluate sensor signals of two or more opening events in order to determine a pattern of behavior of an occupant (5) of the road vehicle (1); and
to determine the probability based on a combined evaluation of sensor signals together with the stored pattern of behavior.

6. Road vehicle (1) according to any one of claims 3 to 5, wherein the controller (30) is further configured
to identify an occupant (5) of the vehicle (1); and
to determine the probability based on a combined evaluation of sensor signals of a current opening event together with the identity of the occupant (5).

7. Road vehicle (1) according to claim 6, wherein the controller (30) is further configured
to evaluate sensor signals of two or more opening events in order to determine a respective pattern of behavior of the identified occupant (5) of the vehicle (1); and
to determine the probability based on a combined evaluation of sensor signals of a current opening event together with the stored pattern of behavior and the identity of the occupant (5).

8. Road vehicle (1) according to claim 7, wherein the controller (30) is further configured
to include the position of an identified occupant (5) related to a specific port (2) in determining the pattern; and
to determine the probability based on a combined evaluation of sensor signals of a current opening event together with the stored pattern of behavior of the identified occupant (5).

9. Road vehicle (1) according to any of claims 1 to 8, wherein the sensor device (10) is configured to use natural language processing on signals from the microphone (28) in order to identify keywords indicative of a non-finished or imminent opening event.

10. Road vehicle (1) according to claim 3, wherein the controller (30) is configured to increase the probability of the opening event with decreasing distance of an occupant (5) from the door handle, which distance is detected by the proximity sensor (16).

11. Road vehicle (1) according to any of claims 1 to 10, wherein
the at least one optical transducer (21) is configured to project onto the surface external to the vehicle a respective light signal (23) for each of the ports (2, 3) for which a detected non-finished or imminent opening event is represented by the sensor signals such that each light signal (23) is projected along a respective light path (22) onto a surface in the periphery of the road vehicle (1).

12. Method of modifying optical light signals (23) projected onto a surface in the periphery of a road vehicle (1), comprising the steps of repeatedly determining a probability of a non-finished or imminent opening event of a port (2, 3) of the road vehicle (1) by a controller (30) based on sensor signals; **characterized by** determining a rate of change of the probability over time as a function of these determined probabilities;
based on the determined rate of change of the probability, modifying the optical light signals (23).

13. Computer program comprising instructions which, when the program is executed by a computer, cause the computer to carry out the method according to claim 12.

14. Computer readable storage medium comprising instructions which, when executed by a computer, cause the computer to carry out the method according to claim 12.

## Patentansprüche

1. Straßenfahrzeug (1), umfassend:
zwei oder mehr Öffnungen (2, 3) auf derselben Seite des Fahrzeugs (1);
eine Sensoreinrichtung (10), die einen oder mehrere Sensoren (13, 15, 16, 17, 19) umfasst, wobei die Sensoreinrichtung (10) konfiguriert ist, um für jede Öffnung (2, 3) einzeln ein unbeendetes oder bevorstehendes Öffnungsereignis der jeweiligen Öffnung (2, 3) zu detektieren, wobei die Sensoreinrichtung (10) ferner konfiguriert ist, um Sensorsignale, die das Ergebnis des Detektierens darstellen, auszugeben;
eine Signalisierungseinrichtung (20), die mindestens einen optischen Wandler (21) zum Aussenden optischer Lichtsignale (23) umfasst;
eine Steuereinheit (30), die konfiguriert ist, um die Signalisierungseinrichtung (20) in Abhängigkeit von den Sensorsignalen zu steuern, um zu bewirken, dass der mindestens eine Wandler (21) ein jeweiliges Lichtsignal (23) für jede der Öffnungen (2, 3) aussendet, für die ein detektiertes unbeendetes oder bevorstehendes Öffnungsereignis durch die Sensorsignale dargestellt wird, sodass jedes Lichtsignal (23) der jeweiligen Öffnung (2, 3) einzeln zugewiesen wird; wobei die Steuereinheit (30) ferner konfiguriert ist, um für jedes detektierte unbeendete oder bevorstehende Öffnungsereignis basierend auf den Sensorsignalen eine Wahrscheinlichkeit eines tatsächlichen Auftretens eines solchen Öffnungsereignisses zu bestimmen und das optische Lichtsignal (23) für eine solche Öffnung (2, 3) in Abhängigkeit von der bestimmten Wahrscheinlichkeit zu modifizieren,
wobei die Steuereinheit (30) ferner konfiguriert ist, um für jedes detektierte unbeendete oder bevorstehende Öffnungsereignis eine Wahrscheinlichkeit eines tatsächlichen Auftretens eines solchen Öffnungsereignisses wiederholt zu bestimmen,
**dadurch gekennzeichnet, dass** die Steuereinheit (30) ferner konfiguriert ist, um eine Rate einer Änderung der Wahrscheinlichkeit im Zeitverlauf in Abhängigkeit von diesen bestimmten Wahrscheinlichkeiten zu bestimmen und das optische Lichtsignal (23) gemäß der bestimmten Rate einer Änderung der Wahrscheinlichkeit zu modifizieren.

2. Straßenfahrzeug (1) nach Anspruch 1, wobei es sich bei einer Öffnung um eine Tür (2), durch die eine Person (5) aus dem Straßenfahrzeug aussteigen oder in das Straßenfahrzeug einsteigen kann, und/oder eine Klappe (3), die zum Einladen/Ausladen, zum Auftanken oder zur Inspektion des Straßenfahrzeugs genutzt wird, handelt.

3. Straßenfahrzeug (1) nach Anspruch 1 oder 2, wobei die Sensoren eines oder mehrere von Folgendem umfassen:
einen Geschwindigkeitsmesser des Straßenfahrzeugs (1) ;
ein GPS-System des Straßenfahrzeugs (1), das konfiguriert ist, um die Entfernung zu einem Ziel anzugeben;
einen Kippschalter für den EIN/AUS-Zustand des Straßenfahrzeugs (1) oder einer Komponente des Fahrzeugs (1) ;
einen Schalter an einem Sicherheitsgurtschloss (14) des Straßenfahrzeugs (1);
eine Bildgebungseinrichtung (15), die konfiguriert ist, um eine Körperhaltung eines Insassen (5) des Straßenfahrzeugs (1) zu tracken;
eine Bildgebungseinrichtung (19), die konfiguriert ist, um ein Bild der Umgebung des Fahrzeugs (1) zu erzeugen;
einen Fingerabdrucksensor (29);
ein Mikrofon (28) im Innenraum des Fahrzeugs (1);
einen Lastsensor (27) eines Sitzes des Fahrzeugs (1) ;
einen Näherungssensor (16), der konfiguriert ist, um eine Entfernung eines Insassen (5) des Straßenfahrzeugs zu einem Türgriff (18) zu detektieren;
einen Berührungssensor (17) auf dem Türgriff (18).

4. Straßenfahrzeug (1) nach einem der Ansprüche 1 bis 3, wobei die Steuereinheit (30) ferner konfiguriert ist,
um Sensorsignale, die durch die Steuereinheit (30) empfangen worden sind, vor mindestens einem vorherigen Öffnungsereignis zu speichern,
die vor dem mindestens einen vorherigen Öffnungsereignis gespeicherten Sensorsignale abzurufen und
die Wahrscheinlichkeit basierend auf einer kombinierten Bewertung der abgerufenen Sensorsignale zusammen mit Sensorsignalen eines aktuellen Öffnungsereignisses zu bestimmen.

5. Straßenfahrzeug (1) nach Anspruch 4, wobei die Steuereinheit (30) ferner konfiguriert ist,
um Sensorsignale von zwei oder mehr Öffnungsereignissen zu bewerten, um ein Muster eines Verhaltens eines Insassen (5) des Straßenfahrzeugs (1) zu bestimmen, und
die Wahrscheinlichkeit basierend auf einer kombinierten Bewertung von Sensorsignalen zusammen mit dem gespeicherten Muster eines Verhaltens zu bestimmen.

6. Straßenfahrzeug (1) nach einem der Ansprüche 3 bis 5, wobei die Steuereinheit (30) ferner konfiguriert ist,
um einen Insassen (5) des Fahrzeugs (1) zu identifizieren und
die Wahrscheinlichkeit basierend auf einer kombinierten Bewertung von Sensorsignalen eines aktuellen Öffnungsereignisses zusammen mit der Identität des Insassen (5) zu bestimmen.

7. Straßenfahrzeug (1) nach Anspruch 6, wobei die Steuereinheit (30) ferner konfiguriert ist,
um Sensorsignale von zwei oder mehr Öffnungsereignissen zu bewerten, um ein jeweiliges Muster eines Verhaltens des identifizierten Insassen (5) des Fahrzeugs (1) zu bestimmen, und
die Wahrscheinlichkeit basierend auf einer kombinierten Bewertung von Sensorsignalen eines aktuellen Öffnungsereignisses zusammen mit dem gespeicherten Muster eines Verhaltens und der Identität des Insassen (5) zu bestimmen.

8. Straßenfahrzeug (1) nach Anspruch 7, wobei die Steuereinheit (30) ferner konfiguriert ist,
um die auf eine spezielle Öffnung (2) bezogene Position eines identifizierten Insassen (5) beim Bestimmen des Musters einzubeziehen und
die Wahrscheinlichkeit basierend auf einer kombinierten Bewertung von Sensorsignalen eines aktuellen Öffnungsereignisses zusammen mit dem gespeicherten Muster eines Verhaltens des identifizierten Insassen (5) zu bestimmen.

9. Straßenfahrzeug (1) nach einem der Ansprüche 1 bis 8, wobei die Sensoreinrichtung (10) konfiguriert ist, um an Signalen aus dem Mikrofon (28) eine Verarbeitung natürlicher Sprache durchzuführen, um Schlüsselwörter, die auf ein unbeendetes oder bevorstehendes Öffnungsereignis hinweisen, zu identifizieren.

10. Straßenfahrzeug (1) nach Anspruch 3, wobei die Steuereinheit (30) konfiguriert ist, um die Wahrscheinlichkeit des Öffnungsereignisses bei einer abnehmenden Entfernung eines Insassen (5) zum Türgriff zu erhöhen, wobei diese Entfernung durch den Näherungssensor (16) detektiert wird.

11. Straßenfahrzeug (1) nach einem der Ansprüche 1 bis 10, wobei
der mindestens eine optische Wandler (21) konfiguriert ist, um ein jeweiliges Lichtsignal (23) für jede der Öffnungen (2, 3), für die ein detektiertes unbeendetes oder bevorstehendes Öffnungsereignis durch die Sensorsignale dargestellt wird, auf die Fläche außerhalb des Fahrzeugs zu projizieren, sodass jedes Lichtsignal (23) entlang eines jeweiligen Lichtwegs (22) auf eine Fläche in der Umgebung des Straßenfahrzeugs (1) projiziert wird.

12. Verfahren zum Modifizieren optischer Lichtsignale (23), die auf eine Fläche in der Umgebung eines Straßenfahrzeugs (1) projiziert werden, umfassend folgende Schritte:
wiederholtes Bestimmen einer Wahrscheinlichkeit eines unbeendeten oder bevorstehenden Öffnungsereignisses einer Öffnung (2, 3) des Straßenfahrzeugs (1) durch eine Steuereinheit (30) basierend auf Sensorsignalen; **gekennzeichnet durch**
Bestimmen einer Rate einer Änderung der Wahrscheinlichkeit im Zeitverlauf in Abhängigkeit von diesen bestimmten Wahrscheinlichkeiten;
basierend auf der bestimmten Rate einer Änderung der Wahrscheinlichkeit Modifizieren der optischen Lichtsignale (23).

13. Computerprogramm, das Befehle umfasst, die, wenn das Programm durch einen Computer ausgeführt wird, bewirken, dass der Computer das Verfahren nach Anspruch 12 durchführt.

14. Computerlesbares Speichermedium, das Befehle umfasst, die, wenn sie durch einen Computer ausgeführt werden, bewirken, dass der Computer das Verfahren nach Anspruch 12 durchführt.

## Revendications

1. Véhicule routier (1) comprenant :
deux orifices ou plus (2, 3) sur le même côté du véhicule (1) ;
un dispositif de capteur(s) (10) comprenant un ou plusieurs capteur(s) (13, 15, 16, 17, 19), le dispositif de capteur(s) (10) étant configuré pour détecter pour chaque orifice (2, 3) individuellement un événement d'ouverture non fini ou imminent de l'orifice respectif (2, 3), le dispositif de capteur(s) (10) étant en outre configuré pour fournir en sortie des signaux de capteur(s) représentant le résultat de la détection ;
un dispositif de signalisation (20) comprenant au moins un transducteur optique (21) pour émettre des signaux lumineux optiques (23) ;
un dispositif de commande (30) configuré pour commander le dispositif de signalisation (20) en fonction des signaux de capteur(s) afin d'amener l'au moins un transducteur (21) à émettre un signal lumineux respectif (23) pour chacun des orifices (2, 3) pour lequel un événement d'ouverture détecté non fini ou imminent est représenté par les signaux de capteur(s) de telle sorte que chaque signal lumineux (23) soit attribué individuellement à l'orifice respectif (2, 3) ;
le dispositif de commande (30) étant en outre configuré pour déterminer pour chaque événement d'ouverture non fini ou imminent détecté, sur la base des signaux de capteur(s), une probabilité d'une occurrence réelle d'un tel événement d'ouverture et pour modifier le signal lumineux optique (23) pour cet orifice (2, 3) en fonction de la probabilité déterminée,
le dispositif de commande (30) étant en outre configuré pour déterminer de façon répétée pour chaque événement d'ouverture non fini ou imminent détecté une probabilité d'une occurrence réelle d'un tel événement d'ouverture,
**caractérisé en ce que** le dispositif de commande (30) est en outre configuré
pour déterminer un taux de variation de la probabilité au fil du temps en fonction de ces probabilités déterminées, et
pour modifier le signal lumineux optique (23) selon le taux de variation déterminé de la probabilité.

2. Véhicule routier (1) selon la revendication 1, dans lequel un orifice est une portière (2), à travers laquelle une personne (5) peut sortir du, ou entrer dans le, véhicule routier, et/ou un hayon (3), qui est utilisé pour charger/décharger, ravitailler en carburant ou entretenir le véhicule routier.

3. Véhicule routier (1) selon la revendication 1 ou la revendication 2, les capteurs comprenant un ou plusieurs des éléments suivants :
un compteur de vitesse du véhicule routier (1) ;
un système GPS du véhicule routier (1) configuré pour indiquer la distance jusqu'à une destination ;
un commutateur à bascule pour l'état MARCHE/ARRÊT du véhicule routier (1) ou un composant du véhicule (1) ;
un commutateur sur une boucle de ceinture de sécurité (14) du véhicule routier (1) ;
un dispositif d'imagerie (15) configuré pour suivre une posture d'un occupant (5) du véhicule routier (1) ;
un dispositif d'imagerie (19) configuré pour créer une image de la périphérie du véhicule (1) ;
un capteur d'empreinte digitale (29) ;
un microphone (28) dans une cabine du véhicule (1) ;
un capteur de charge (27) d'un siège du véhicule (1) ;
un capteur de proximité (16) configuré pour détecter une distance d'un occupant (5) du véhicule routier par rapport à une poignée de portière (18) ;
un capteur tactile (17) sur la poignée de portière (18) .

4. Véhicule routier (1) selon l'une quelconque des revendications 1 à 3, dans lequel le dispositif de commande (30) est en outre configuré
pour stocker des signaux de capteur(s) qui ont été reçus par le dispositif de commande (30) avant au moins un événement d'ouverture antérieur ;
pour récupérer les signaux de capteur(s) stockés avant l'au moins un événement d'ouverture antérieur ; et
pour déterminer la probabilité sur la base d'une évaluation combinée des signaux de capteur(s) récupérés conjointement avec des signaux de capteur(s) d'un événement d'ouverture actuel.

5. Véhicule routier (1) selon la revendication 4, dans lequel le dispositif de commande (30) est en outre configuré
pour évaluer des signaux de capteur(s) de deux événements d'ouverture ou plus afin de déterminer un modèle de comportement d'un occupant (5) du véhicule routier (1) ; et
pour déterminer la probabilité sur la base d'une évaluation combinée de signaux de capteur(s) conjointement avec le modèle de comportement stocké.

6. Véhicule routier (1) selon l'une quelconque des revendications 3 à 5, dans lequel le dispositif de commande (30) est en outre configuré
pour identifier un occupant (5) du véhicule (1) ; et
pour déterminer la probabilité sur la base d'une évaluation combinée de signaux de capteur(s) d'un événement d'ouverture actuel conjointement avec l'identité de l'occupant (5).

7. Véhicule routier (1) selon la revendication 6, dans lequel le dispositif de commande (30) est en outre configuré
pour évaluer des signaux de capteur(s) de deux événements d'ouverture ou plus afin de déterminer un modèle de comportement respectif de l'occupant identifié (5) du véhicule (1) ; et
pour déterminer la probabilité sur la base d'une évaluation combinée de signaux de capteur(s) d'un événement d'ouverture actuel conjointement avec le modèle de comportement stocké et l'identité de l'occupant (5).

8. Véhicule routier (1) selon la revendication 7, dans lequel le dispositif de commande (30) est en outre configuré
pour inclure la position d'un occupant identifié (5) associé à un orifice spécifique (2) lors de la détermination du modèle ; et
pour déterminer la probabilité sur la base d'une évaluation combinée de signaux de capteur(s) d'un événement d'ouverture actuel conjointement avec le modèle de comportement stocké de l'occupant identifié (5).

9. Véhicule routier (1) selon l'une quelconque des revendications 1 à 8, dans lequel le dispositif de capteur(s) (10) est configuré pour utiliser un traitement de langage naturel sur des signaux provenant du microphone (28) afin d'identifier des mots-clés indicatifs d'un événement d'ouverture non fini ou imminent.

10. Véhicule routier (1) selon la revendication 3, dans lequel le dispositif de commande (30) est configuré pour augmenter la probabilité de l'événement d'ouverture avec une distance décroissante d'un occupant (5) par rapport à la poignée de portière, laquelle distance est détectée par le capteur de proximité (16).

11. Véhicule routier (1) selon l'une quelconque des revendications 1 à 10, dans lequel
l'au moins un transducteur optique (21) est configuré pour projeter sur la surface externe du véhicule un signal lumineux respectif (23) pour chacun des orifices (2, 3) pour lequel un événement d'ouverture détecté non fini ou imminent est représenté par les signaux de capteur(s) de telle sorte que chaque signal lumineux (23) soit projeté le long d'un trajet lumineux respectif (22) sur une surface dans la périphérie du véhicule routier (1).

12. Procédé de modification de signaux lumineux optiques (23) projetés sur une surface dans la périphérie d'un véhicule routier (1), comprenant les étapes consistant à
déterminer de façon répétée une probabilité d'un événement d'ouverture non fini ou imminent d'un orifice (2, 3) du véhicule routier (1) par un dispositif de commande (30) sur la base de signaux de capteur(s) ; **caractérisé par**
la détermination d'un taux de variation de la probabilité au fil du temps en fonction de ces probabilités déterminées ;
sur la base du taux de variation déterminé de la probabilité, la modification des signaux lumineux optique (23).

13. Programme informatique comprenant des instructions qui, lorsque le programme est exécuté par un ordinateur, amènent l'ordinateur à mettre en œuvre le procédé selon la revendication 12.

14. Support de stockage lisible par ordinateur comprenant des instructions qui, lorsqu'elles sont exécutées par un ordinateur, amènent l'ordinateur à mettre en œuvre le procédé selon la revendication 12.
